# EUROPEAN PATENT SPECIFICATION

(11) **EP 3 084 024 B1**
(45) Date of publication and mention of the grant of the patent: **08.07.2020**
(21) Application number: 14830534.5
(22) Date of filing: 18.12.2014
(51) Int. Cl.: C22B 7/02, C22B 58/00

(54) **METHOD OF SEPARATING INDIUM AND ARSENIC FROM EACH OTHER**
VERFAHREN ZUR TRENNUNG VON INDIUM UND ARSEN VONEINANDER
PROCÉDÉ POUR SÉPARER L'INDIUM ET L'ARSENIC L'UN DE L'AUTRE

(30) Priority: 19.12.2013 FI 20136296
(43) Date of publication of application: 26.10.2016
(73) Proprietor: Outotec (Finland) Oy, 02230 Espoo (FI)
(72) Inventor: TAKALA, Heikki, FI-28130 Pori (FI); SAXÉN, Björn, FI-28360 Pori (FI)
(74) Representative: Kolster Oy Ab
(86) International application number: PCT/FI2014/051028
(87) International publication number: WO 2015/092150

(56) References cited:
- CN-A- 101 629 246
- CN-A- 101 660 054
- US-A- 3 976 743
- ALFANTAZI A M ET AL: "Processing of indium: a review", MINERALS ENGINEERING, PERGAMON PRESS , OXFORD, GB, vol. 16, no. 8, 1 August 2003 (2003-08-01) , pages 687-694, XP027537564, ISSN: 0892-6875 [retrieved on 2003-08-01]
- T.HAAKANA ET AL: "Outotec direct leaching application in China", THE JOURNAL OF THE SOUTH AFRICAN INSTITUTE OF MINING AND METALLURGY, vol. 108, May 2008 (2008-05), pages 245-251, XP002738711,

## Description

### FIELD OF THE INVENTION

The present invention relates to a method and process arrangement of separating indium and arsenic from a zinc-containing starting material.

### BACKGROUND OF THE INVENTION

Metallurgical processes, such as Ausmelt TSL (Top Submerged Lance) process form fumes, from which a dust comprising metal oxides is obtained, when the fume is cooled. The Ausmelt TSL furnace process is capable of recovering valuable metals from raw materials, wastes or intermediate materials of metallurgical processes. Elements, such as zinc, lead, silver, germanium, cadmium, indium and arsenic evaporate in the furnace and are obtained as fume oxides. The fume oxide is leached subsequently to recover the valuable metals in the fume. The background of the present invention will be clarified with respect to zinc production and an Ausmelt TSL process although, the present invention is also applicable in other processes where similar problems occur.

The presence of arsenic and indium need special attention. Arsenic, which typically exists in the fume oxide, is leached and needs to be removed from the solution. A normal practise, for example at a zinc plant, is to precipitate arsenic together with iron to form a final iron residue, such as jarosite, which can be disposed. However, if iron residues formed in the process are desired to be recycled through the TSL furnace, arsenic will result in the fume and not in the slag making the applying of the precipitation process impossible as the fume leaching will dissolve arsenic and return it back to the zinc process. Indium leached from the fume oxides is desired to be recovered as a valuable product, however, standard technology for this purpose is not suitable as will be explained later.

Publication WO 2007/074207 discloses a method for recovering indium from zinc solution by precipitation. The publication discloses routeing a zinc sulphate solution generated in connection with the leaching of zinc sulphide concentrate and containing iron and rare metals, to a neutralization and precipitation stage, in which the solution is neutralized to a pH range of 2.5 - 3.5 to precipitate trivalent iron in the solution and to co-precipitate at least one rare metal with the iron. The publication is silent about the separation of arsenic.

Publication WO 2012/049361 discloses a method for treating a solution containing zinc sulphate, so that at least one of the rare metals, such as indium, gallium and germanium can be separated from it. A portion of the metals to be separated can be precipitated from zinc sulphate solution by neutralizing the acidic solution and at least a portion is cemented by means of metal powder. The solid precipitates that are formed can be combined and treated subsequently in some suitable way to leach out the desired metals.

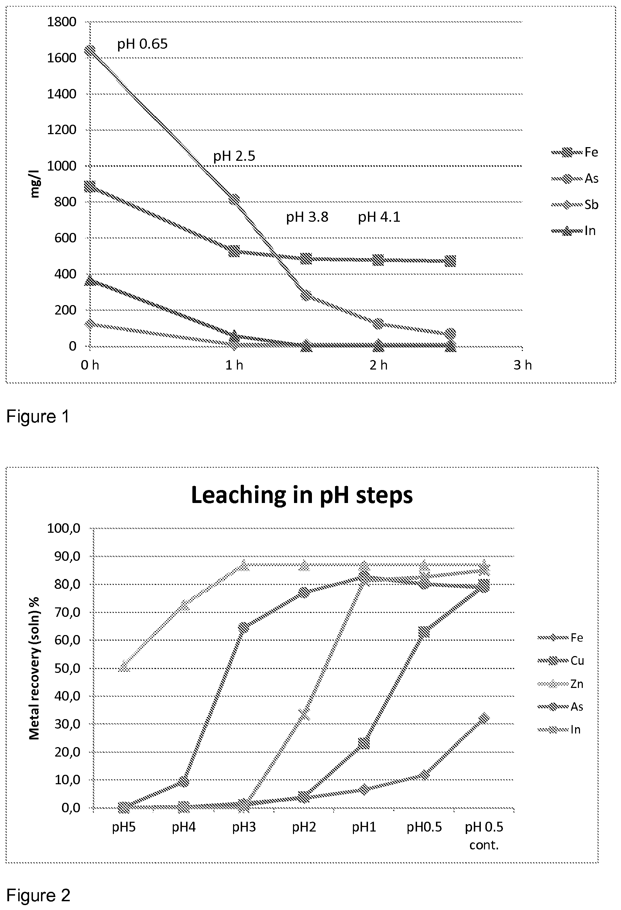

However, if both arsenic and indium are present in the solution and the indium is precipitated from the leaching liquor by raising the pH of the solution, this results also in the co-precipitation of arsenic. Thus the precipitate obtained by a method of prior art, i.e. by raising the pH, would contain both arsenic and indium and a further treatment step for separating the valuable indium from the arsenic waste would be needed. Figure 1 shows this phenomenon in more detail. Figure 1 illustrates results of a batch test carried out according to the method in publication WO 2012/049361, where pH of the solution from fume oxide leaching was raised stepwise. Ca(OH)₂ was used for neutralizing the solution up to pH 2.5, after which zinc powder was added.

Sulphide precipitation with H₂S (hydrogen sulphide) is one possible method for precipitating arsenic without precipitating indium at the same time. However, the use of H₂S is not desirable from the occupation hygiene and safety aspects. Furthermore, the stability of the precipitated arsenic sulphide is not high enough for disposal. As₂S₃ is toxic for humans and very toxic to aquatic organisms, as it may cause long-term adverse effects in the aquatic environment.

Ke et al. disclose in Recovery of metal values from copper smelter flue dust, Hydrometallurgy, 12 (1984) 217 - 224, a process for metal recovery from a zinc and lead containing copper smelter flue dust. After leaching indium is recovered by solvent extraction succeeded by ferric arsenate precipitation and Cd and Zn are recovered by traditional methods. A drawback of this process is that the entire solution in the method is to be treated in the solvent extraction for indium. All zinc leached from the starting material is in the same solution as indium and, especially if the zinc content is high, zinc will be co-extracted together with indium which is not desired.

The pH selectivity between zinc and indium in a leaching process has been presented earlier by A.M. Alfantazi and R.R. Moskalyk, Processing of indium: a review, Minerals Engineering 16 (2003) 687 - 694.

Zhou et al. disclose in Recovering In, Ge and Ga from Zinc Residues, in JOM, June 1989, a solvent extraction process for recovering indium, germanium and gallium.

Arsenic is known to be removed from a solution by reduction to solid elemental form (As). Cementation of arsenic with zinc powder is disclosed in (Masuda, H., Sato, S, Kudo, Y., Shibachi, Y., "Installation of arsenic removal in the mematite process", Yazawa International Symposium, Metallurgical and Materials Processing, Principles and Technologies, High Temperature Metal Production, Volume 2, 2003, p. 99 - 109.

CN 101660054 A discloses a method for extracting metal indium from waste residues generated from lead and zinc smelting. The method comprises the steps of a low-temperature and low-acid leaching to remove acid-soluble metals and a high-temperature and high-acid leaching to obtain indium.

CN 101629246 A discloses a method to recover zinc and indium from zinc calcined soot dust. The method comprises a neutral leaching step, a weak acid leaching step and a peracid leaching step.

### BRIEF DESCRIPTION OF THE INVENTION

An object of the present invention is thus to provide a method so as to alleviate the above disadvantages. The objects of the invention are achieved by a method which is characterized by what is stated in the independent claims. The preferred embodiments of the invention are disclosed in the dependent claims.

The invention is based on the idea of selective leaching for separating indium and arsenic from each other. More specifically the invention is based on the idea of first performing a low acid leaching step for a zinc-containing starting material, such as a starting material containing fume oxides, in which at least zinc and arsenic is leached but indium is not leached. After the low acid leaching step a high acid leaching is performed for the solid matter obtained from the low acid leaching. In the high acid leaching indium is leached and a solid residue, typically of Pb and Ag is obtained. The selective leaching is illustrated in Figure 2, where the leaching recovery of various metals as a function of pH is plotted. The data is from a batch leaching test where pH is lowered with stepwise acid addition.

The method of separating indium and arsenic from a zinc-containing starting material comprises the following steps:
- a low acid leaching step, wherein the starting material is contacted with a first leaching liquor in pH of 2.5 - 5 and at a temperature of above 40°C for obtaining a first leach solution comprising in leached form a first part of arsenic and zinc,
- a first solid-liquid separation step for separating solid matter from the first leach solution,
- a high acid leaching step, wherein the solid matter is contacted with a second leaching liquor in pH of below 2.5 for obtaining a second leach solution comprising in leached form indium and a second part of zinc and arsenic
- a recovering step for separating and recovering indium from the second leach solution,
wherein in the low acid leaching step the first leaching liquor comprises sulphuric acid less than 2 g/l, typically less than 1.5 g/l, more typically in the range of 0.1 - 1.5 g/l.

An advantage of the method of an embodiment of the invention is that valuable metals from zinc-containing starting material, such as fume oxide obtained for example from an Ausmelt TSL furnace, can be recovered with excellent yield and purity. Arsenic is routed to a solution stream free of indium, from which arsenic can be precipitated without co-precipitating indium.

Another advantage of the method of an embodiment of the invention is that arsenic can be separated from iron by cementation. In the same embodiment for example copper can be cemented together with arsenic.

A further advantage of the present invention is when treating zinc concentrates, zinc ores, zinc wastes and/or intermediates from existing operations in a TSL furnace, and thereafter the obtained fume oxides in the leaching steps of the present invention is that zinc sulphate solution from the leaching steps of the present invention can be further treated in an existing zinc plant.

When applying present invention at a stand-alone plant, the zinc sulphate solution from the leaching steps can after arsenic removal be further treated with standard zinc solution purification for removal of e.g. Cu, Cd, Ni and Co. Finally, zinc can be recovered as SHG zinc cathode using conventional electrowinning. In case of significant amounts of halides such as CI and F in solution, a solvent extraction step for zinc can be used as a barrier preventing halides entering the zinc electrowinning stage.

### BRIEF DESCRIPTION OF THE DRAWINGS

In the following the invention will be described in greater detail by means of example embodiments with reference to the attached drawings, in which
Figure 1 is a diagram showing results of a batch test, where pH of the solution from fume oxide leaching was raised stepwise;
Figure 2 is a diagram showing results of a batch test where fume oxides are leached stepwise at different pH values;
Figure 3 is an example embodiment of the present invention;
Figure 4 is an example embodiment of the present invention;
Figure 5 is a diagram showing solution concentrations in a cementation test as a function of zinc powder added. The axis for concentration is logarithmic;
Figure 6 is a diagram showing solution concentrations in another cementation test as a function of zinc powder added;
Figure 7 is an example embodiment of the present invention.

### DETAILED DESCRIPTION OF THE INVENTION

The present invention relates to a method of separating indium and arsenic from a zinc-containing starting material, wherein the method comprises
- a low acid leaching step, wherein the starting material is contacted with a first leaching liquor in pH of 2.5 - 5 and at a temperature of above 40°C for obtaining a first leach solution comprising in leached form a first part of arsenic and zinc,
- a first solid-liquid separation step for separating solid matter from the first leach solution,
- a high acid leaching step, wherein the solid matter is contacted with a second leaching liquor in pH of below 2.5 for obtaining a second leach solution comprising in leached form indium and a second part of zinc and arsenic
- a recovering step for separating and recovering indium from the second leach solution
wherein in the low acid leaching step the first leaching liquor comprises sulphuric acid less than 2 g/l, typically less than 1.5 g/l, more typically in the range of 0.1 - 1.5 g/l.

According to an embodiment of the invention the recovering step typically comprises a second solid-liquid separation step, wherein the solution containing indium and the second part of zinc and arsenic in leached form is separated from a leach residue. Typically the indium is recovered from the second leach solution by solvent extraction.

By the method of the present invention it is possible to separate indium and arsenic contained in the starting material from each other. The starting material is any starting material from which it is desired to remove both indium and arsenic, even as separate streams. Typically the starting material is zinc-containing starting material, such as a zinc fuming product, typically obtained from a Top Submerged Lancing (TSL) furnace fume by cooling the fume and thereby forming a dust comprising the metals of the fume in oxide form. Typically the TSL furnace treats zinc concentrate, zinc ore, metals containing solid wastes and/or intermediate products of a zinc plant. More typically, the starting material is obtained from a Top Submerged Lancing (TSL) process as TSL furnace dust, which TSL process uses as a feed material zinc concentrate and/or zinc ore, and/or metals containing solid wastes and/or intermediate products of a zinc plant. Typically the fume oxide dust comprises elements selected from zinc, lead, silver, germanium, cadmium, indium and arsenic. The fume oxide dust may also comprise small amounts of nickel and copper. The zinc fume oxide is thus oxide dust condensed from the oxidation of the zinc metal vapours produced in the furnace. The composition of the fume oxide dust depends on the composition of feed material fed to the TSL furnace and the operation of the TSL furnace. However, as can be appreciated by one skilled in the art, this process can be applied to any such zinc bearing dusts arising from other smelting operations.

Optionally, the content of halides in the fume oxide such as fluorine and chlorine can be reduced by a washing step prior to leaching. The starting material may be washed with water or alternatively at alkaline conditions before feeding to the low acid leaching step. The starting material is fed to a low acid leaching step, wherein the starting material is contacted with first leach liquor, which typically comprises sulphuric acid. According to an embodiment of the invention the first leach liquor comprises spent acid from zinc electrowinning. Typically in the low acid leaching step the pH is 2.5 or higher, more typically in the range of 2.5 - 5, even more typically in the range of 3 - 4. The low acid leaching is typically carried out at atmospheric pressure. Typically the temperature in the low acid leaching is above 40°C, more typically between 50 and 80°C. In the low acid leaching step most of the zinc and arsenic present are dissolved into the leaching solution, but indium is virtually not dissolved at all. Typically, at least 80% of the zinc and at least 50% of the arsenic present in the starting material are leached in the low acid leaching step. In the low acid leaching step leach slurry is formed comprising zinc and arsenic in leached form and unleached solid matter. Typically the first leach solution comprises in leached form a first part of arsenic and zinc and a solid matter containing virtually all indium and a second part of arsenic and zinc.

The unleached solid matter is separated from the first leach solution in a first solid-liquid separation step. The first solid-liquid separation step may be performed by any suitable known method, such as thickening, centrifuging, filtering or any combination thereof.

According to an embodiment of the invention the first leach solution comprising the first part of arsenic and zinc in leached form obtained after the first solid-liquid separation step may be subjected to an arsenic removal step, wherein the arsenic is precipitated as ferric arsenate and/or scorodite. The arsenic may be precipitated by any suitable known method in the art, such as by oxidation or by increasing the pH.

According to an embodiment of the invention the first leach solution comprising the first part of arsenic and zinc in leached form obtained after the first solid-liquid separation step may be subjected to an arsenic removal step, wherein arsenic is cemented. If the solution comprises copper, copper is cemented together with arsenic. Typically, the first leach solution comprising the first part of arsenic and zinc in leached form obtained from the first solid-liquid separation step is subjected to an arsenic removal step, wherein a part of or all of the arsenic is cemented, optionally together with copper, contained in the solution. In the cementation zinc powder is added, typically continuously. The amount of zinc powder added is typically between 1 and 3 times the amount of cemented metals on a molar base. In the cementation step copper is usually cemented completely and most of the arsenic, typically above 75% of the total arsenic present, is cemented.

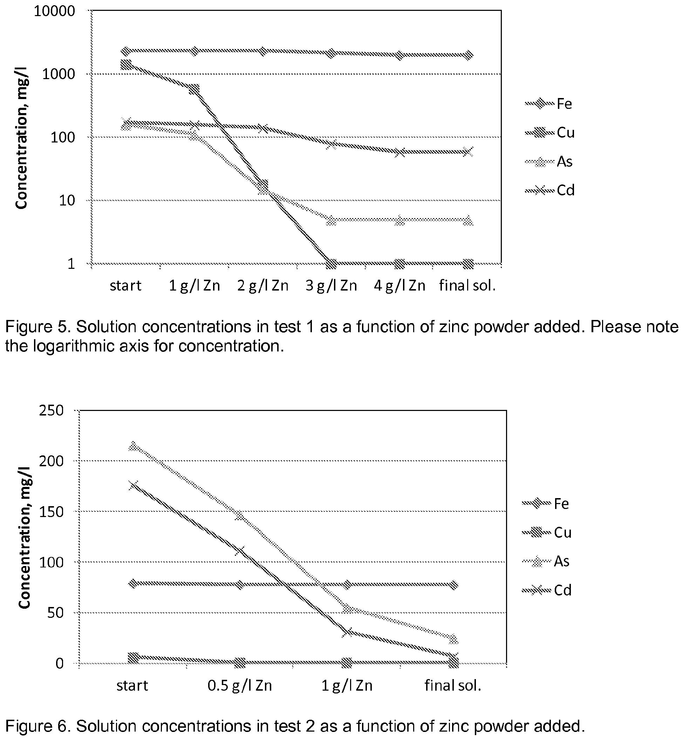

The cementation of arsenic with zinc powder is shown in the results of two tests (Figures 5 and 6). Both tests were carried out at temperature 70°C. In the first test, the initial concentrations of copper and iron were high compared to the initial concentration of arsenic. Metal concentrations are plotted as functions of zinc powder addition in Figure 5. It is seen that all copper, most of the arsenic and part of the cadmium is cemented. The end solids of the first cementation test contained 8% As, 5% Zn, 71% Cu, 5% Cd and 3% Fe. In the second cementation test, the initial concentrations of copper and iron were low compared to the initial concentration of arsenic. Metal concentrations are plotted as functions of zinc powder addition in Figure 6. It is seen that also in this case most of the arsenic is cemented. The end solids of the second test contained 16% As, 50% Zn, 0.9% Cu, 18% Cd and 0.1% Fe.

Cadmium is also partially cemented at the same time. However, the process may comprise a further cadmium polishing step, wherein remaining cadmium is cemented together with possible cobalt and nickel in the solution. In the cementation step iron remains in the solution. Even though, not all the arsenic is cemented, this does not cause problems, as a small residual concentration of arsenic is allowed in the end solution. Typically, iron in the solution after the arsenic cementation is precipitated as ferric hydroxide or goethite by neutralisation and simultaneous oxidation. In the same iron precipitation step, any arsenic remaining in solution will precipitate as ferric arsenate.

The iron precipitate can then be recycled to the TSL furnace, and this enables a process where all iron from the feed material is finally outlet in the benign slag product of TSL. A small amount of arsenic is tolerated in the recycled iron precipitate, as arsenic will go to the fume oxide from TSL furnace and finally end up in the cemented arsenic. All copper leached from the fume oxide will cement together with arsenic. If copper concentration is high enough, the cemented Cu-As product could be sold for further treatment in a copper smelter.

Arsenic can be cemented with zinc powder from fume leach solution, both with high copper concentration but also when the copper concentration in the solution is less than *1*/*10* of the arsenic concentration.

The obtained zinc sulphate solution may be treated further by a suitable method. For example, the zinc sulphate solution from the leaching steps of the present invention can be further treated in the existing zinc plant. When applying present invention at a stand-alone plant, the zinc sulphate solution from the leaching steps can be further treated with standard zinc solution purification for removal of e.g. Cu, Cd, Ni and Co. Finally, zinc can be recovered as SHG cathode using conventional electrowinning. In case of significant amounts of halides such as CI and F in solution, a solvent extraction step for zinc can be used as a barrier preventing halides entering the zinc electrowinning stage.

After the low acid leaching step and the first solid-liquid separation step the obtained solid matter is fed to a high acid leaching step, wherein the solid matter is contacted with a second leaching liquor for obtaining a second leach solution comprising in leached form indium and a second part of zinc and arsenic. The second leaching liquor typically comprises sulphuric acid. According to an embodiment of the invention the second leach liquor comprises spent acid from zinc electrowinning. Typically in the high acid leaching step the pH is below 2.5, more typically in the range of 0.2 - below 2.5, even more typically in the range of 0.2 - 1.0. The second leach liquor comprises sulphuric acid 2 - 120 g/l, typically 20 - 120 g/l, more typically 30 - 80 g/l. The high acid leaching is typically carried out at atmospheric pressure. Typically the temperature in the high acid leaching is above 60°C, more typically between 70 and 100°C. Indium is dissolved in the high acid leaching step as far as possible. Typically at least 70 % of the indium present in the starting material is leached in the high acid leaching step. Also the second part of zinc and arsenic are typically leached during the high acid leaching step, total leaching recovery typically being 98% for the zinc and 80% for the arsenic present in the starting material of leaching. If part of the zinc is as sulphide in the starting material, oxidation with e.g. oxygen gas is beneficial to leach also the sulphide zinc.

According to an embodiment of the invention the method comprises as a third leaching step a super high acid leaching step after the high acid leaching step for the solid matter separated after the second high acid leaching step. Thus, there is a solid-liquid separation step between the high acid leaching step and the super high acid leaching step. To avoid formation of large amounts of ferric iron, that would hamper the recovery of indium, the oxidation is preferably carried out in a third separate leaching step. In this third step, also a higher acidity can be maintained than in the second step. The higher acidity favours both zinc and indium leaching for some fume oxides. The solution of this third, so called super high acid leaching step typically contains above 100 g/l sulphuric acid, more typically 140 - 180 g/l sulphuric acid. The solution containing indium and zinc from the third leaching step is returned to the second leaching step (counter-currently). The purpose of the third, super high acid leaching step is to leach indium and zinc even further than in the second high acid leaching step. The leached indium will be recovered from the solution obtained from the second, high acid leaching step. Thus, the second leaching step acts also as a reducing and neutralizing step for the leach solution obtained from the third, super high acid leaching step. In the second leaching step ferric iron is reduced before indium is recovered by solvent extraction. The reduction of ferric iron is advantageous before indium is recovered by solvent extraction.

After the high acid leaching step the method comprises a recovering step for separating and recovering indium from the second leach solution. The method further comprises a second solid-liquid separation step for separating a leach residue from the second leach solution comprising indium and the second part of zinc and arsenic in leached form. The second solid-liquid separation step may be performed by any suitable known method, such as thickening, centrifuging, filtering or any combination thereof. The separated second leach residue, i.e. the solid matter is optionally further treated in a third, super high leaching step, as described above. After this optional step, the third solid-liquid separation step may be performed by any suitable known method, such as thickening, centrifuging, filtering or any combination thereof. The solution from the optional third leaching step is returned to the second leaching step. The separated final leach residue typically comprises lead and silver. Silver can be recovered from the leach residue by flotation, as practised for lead-silver containing leach residues at some zinc plants.

According to an embodiment of the invention the method further comprises recovering indium by solvent extraction from the second leach solution obtained from the second solid-liquid separation step. If the method comprises the optional third super high acid leaching step, the metals leached during that step are also recovered from the second leach solution. Typically the solvent extraction is performed by D2EHPA (di-(2-ethylhexyl) phosphoric acid). The indium stripped from the organic phase can subsequently be cemented to a solid product. After recovering indium by solvent extraction, the solution comprising zinc and arsenic may be returned back to the low acid leaching step.

It is also disclosed a process arrangement for performing the method of the present invention. The process arrangement of separating indium and arsenic from a zinc-containing starting material comprises
- a low acid leaching unit adapted for contacting the starting material with a first leaching liquor for obtaining a first leach solution comprising in leached form a first part of arsenic and zinc,
- a first solid-liquid separation unit adapted for separating solid matter from the first leach solution,
- a high acid leaching unit, adapted for contacting the solid matter with a second leaching liquor for obtaining a second leach solution comprising in leached form indium and a second part of zinc and arsenic
- a recovering unit for separating and recovering indium from the second leach solution.

The process arrangement may further comprise in the recovering unit a second solid-liquid separation unit adapted for separating a leach residue from the second leach solution comprising indium and the second part of zinc and arsenic in leached form.

The process arrangement may comprise a third, super high acid leaching unit after the high acid leaching unit. The super high acid leach unit is adapted for leaching both zinc and indium and connected to the arrangement in such a manner that the solution from the third leaching unit can be directed to the second leaching unit.

The process arrangement may further comprise in the recovering unit a solvent extraction unit adapted for recovering indium from the second leach solution.

The process arrangement may comprise an arsenic removal unit adapted for precipitating the arsenic contained in the first leach solution as ferric arsenate and/or scorodite.

The arrangement may comprise an arsenic cementation unit, wherein part of or all arsenic, and copper, if present, are cemented, which are contained in the first leach solution. Any remaining part of arsenic may be then precipitated with the iron remaining in the solution.

Typically the starting material is fume oxide dust comprising elements selected from zinc, lead, silver, germanium, cadmium, copper, nickel, indium and arsenic. More typically, the starting material is obtained from a TSL process as TSL furnace dust, which TSL process uses as a feed material zinc concentrate and/or zinc ore or metals containing solid wastes and/or intermediate products of a zinc plant.

### List of reference numbers

- 2: fume oxide dust
- 4: first spent sulphuric acid
- 6: low acid leaching step
- 8: zinc and arsenic-containing solution
- 9: arsenic removal step
- 10: solid matter
- 11: ferric arsenate/scorodite precipitate
- 12: high acid leaching step
- 13: ZnSO₄ -solution
- 14: second spent sulphuric acid
- 16: indium-containing solution
- 18: solid residue of PbAg
- 20: indium solvent extraction step
- 22: zinc and arsenic -containing solution
- 24: indium cementation step
- 26: indium product
- 30: arsenic and copper cementation
- 31: AsCu cake
- 32: ZnSO₄ solution
- 33: Iron precipitation
- 34: Iron precipitate, possibly circulated to TSL furnace
- 35: ZnSO₄ solution to further purification

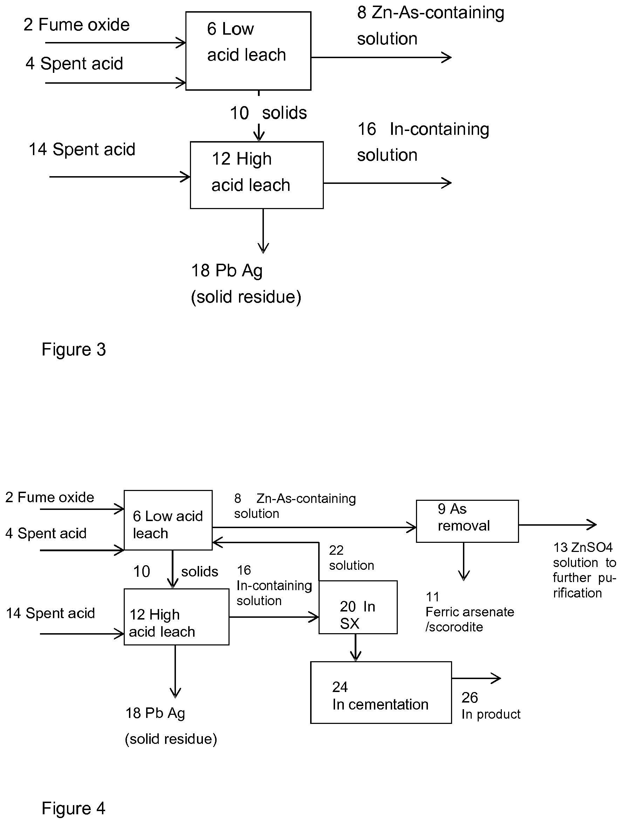

Figure 3 shows an example embodiment of the invention, wherein the starting material of fume oxide dust 2 is fed to a low acid leaching step 6 together with a first spent sulphuric acid 4. The conditions in the low acid leaching step are pH is 2.5 or higher, typically in the range of 2.5 - 5, more typically 3 - 4. The pressure is atmospheric pressure and the temperature is kept above 40°C.

A first part of arsenic and zinc is leached during the low acid leaching step. After the low acid leaching step the unleached solids 10 are separated from the arsenic and zinc -containing solution 8. (The solid-liquid separation is not shown in the figure 3 in detail.)

The separated solid matter 10 is fed to a high acid leaching step 12 together with a second spent sulphuric acid 14. In the high acid leaching step 12 indium and a second part of zinc and arsenic are leached into the sulphuric acid. The conditions in the high acid leaching step are pH below 2.5, typically in the range of 0.2 - below 2.5, more typically 0.2 - 1.0 and the second leach liquor comprises sulphuric acid 2 - 120 g/l, typically 20 - 120 g/l, more typically 30 - 80 g/l. The pressure is atmospheric pressure and the temperature is kept above 60°C.

After the high acid leaching step 12 a second solid-liquid separation step (not shown in the figure) is performed thereby forming indium-containing solution 16 and solid residue 18 containing Pb and Ag. Indium is separated and recovered from the solution (not shown in the figure). The method may also comprise a super high acid leaching step (not shown in the figure) for further leaching indium and zinc from the solid residue obtained from the high acid leaching step. The solution from the super high acid leaching step is recycled back to the high acid leaching step.

Figure 4 shows an example embodiment of the present invention, which is otherwise equal to the example embodiment of Figure 3, except of the following. The arsenic-containing solution 8 is fed to an arsenic removal step 9, wherein the arsenic-containing solution is subjected to precipitation and a ferric arsenate and/or scorodite precipitate 11 is formed. The zinc sulphate solution 13 separated from the precipitate 11 is fed to solution purification and zinc electrowinning stages.

The indium-containing solution 16 is fed to an indium solvent extraction step 20, wherein indium is separated from the solution 16 by using D2EHPA. The solution 22 comprising zinc and arsenic is recycled back to the low acid leaching step 6. The indium obtained from the solvent extraction step 20 is further fed to indium cementation step 24, from which a solid indium product 26 is obtained.

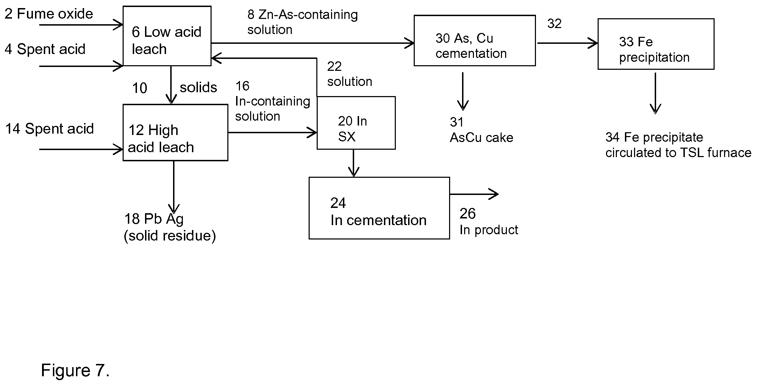

Figure 7 shows an example embodiment of the present invention, which is otherwise equal to the example embodiment of Figure 3, except of the following. A solution containing zinc and arsenic 8 from the low acid leaching step 6 is fed to a cementation step 30, wherein copper and at least a part of arsenic are cemented, i.e. Cu and As are reduced into solid elemental form. Zinc powder is added, typically continuously to the cementation step. An arsenic-copper cake 31 is obtained. The zinc sulphate solution 32 is fed to iron precipitation step 33, wherein iron and the second part of arsenic are precipitated by means of oxidation and neutralization. The precipitate 34 formed can be circulated to a TSL furnace. Zinc containing solution 35 is fed to further purification and electrowinning as per standard zinc processing technology.

It will be obvious to a person skilled in the art that, as the technology advances, the inventive concept can be implemented in various ways. The invention and its embodiments are not limited to the examples described above but may vary within the scope of the claims.

## Claims

1. A method of separating indium and arsenic from a zinc-containing starting material, wherein the method comprises
- a low acid leaching step, wherein the starting material is contacted with a first leaching liquor in pH of 2.5 - 5 and at a temperature of above 40°C for obtaining a first leach solution comprising in leached form a first part of arsenic and zinc,
- a first solid-liquid separation step for separating solid matter from the first leach solution,
- a high acid leaching step, wherein the solid matter is contacted with a second leaching liquor in pH of below 2.5 for obtaining a second leach solution comprising in leached form indium and a second part of zinc and arsenic
- a recovering step for separating and recovering indium from the second leach solution,
wherein in the low acid leaching step the first leaching liquor comprises sulphuric acid less than 2 g/l, typically less than 1.5 g/l, more typically in the range of 0.1 - 1.5 g/l.

2. The method according to claim 1, wherein the starting material is fume oxide dust comprising elements selected from zinc, lead, silver, germanium, cadmium, copper, nickel, indium and arsenic.

3. The method according to any one of the preceding claims, wherein the starting material is obtained from a TSL process as TSL furnace dust, which TSL process uses as a feed material zinc concentrate and/or zinc ore and/or metals containing solid wastes and/or intermediate products of a zinc plant.

4. The method according to any one of the preceding claims, wherein the method further comprises a super high acid leaching step for leaching both zinc and indium, typically after the high acid leaching step, wherein optionally the solution obtained from the super high acid leaching step is returned to the high acid leaching step and/or wherein optionally the sulphuric acid concentration in the super high acid leaching step is 100 g/l or higher, typically 140 - 180 g/l.

5. The method according to any one of the preceding claims, wherein the method further comprises in the recovering step a second solid-liquid separation step for separating a leach residue from the second leach solution comprising indium and the second part of zinc and arsenic in leached form.

6. The method according to any one of the preceding claims, wherein the method further comprises in the recovering step recovering indium from the second leach solution by solvent extraction.

7. The method according to any one of the preceding claims, wherein the first leach solution comprising the first part of arsenic and zinc in leached form obtained from the first solid-liquid separation step is subjected to a arsenic removal step, wherein the arsenic is precipitated as ferric arsenate and/or scorodite.

8. The method according to any one of the preceding claims 1 to 6, wherein the first leach solution comprising the first part of arsenic and zinc in leached form obtained from the first solid-liquid separation step is subjected to a arsenic removal step, wherein a part of or all of the arsenic is cemented, optionally together with copper, contained in the solution.

9. The method according to claim 8, wherein iron remaining in the solution after the arsenic cementation is precipitated by oxidation and neutralization and any arsenic remaining in solution is precipitated simultaneously as ferric arsenate.

10. The method according to any one of the preceding claims, wherein the method comprises a washing step before the low acid leaching step, wherein the starting material, typically fume oxide dust, is washed with water or in alkaline conditions.

11. The method according to any one of the preceding claims, wherein the first leach liquor and the second leach liquor comprise sulphuric acid.

12. The method according to any one of the preceding claims, wherein the first leach liquor and the second leach liquor comprise spent acid from zinc electrowinning.

13. The method according to any one of the preceding claims, wherein in the high acid leaching step the pH is typically in the range of 0.2 - below 2.5, more typically in the range of 0.2 - 1.0.

14. The method according to any one of the preceding claims, wherein the low acid leaching step and/or the high acid leaching step is carried out at atmospheric pressure.

15. The method according to any one of the preceding claims, wherein in the low acid leaching step the temperature is between 50 and 80°C and/or wherein in the high acid leaching step the temperature is above 60°C, typically between 70 and 100°C.

16. The method according to any one of the preceding claims, wherein in the high acid leaching step the second leach liquor comprises sulphuric acid 2 - 120 g/l, typically 20 - 120 g/l, more typically 30 - 80 g/l.

## Patentansprüche

1. Verfahren zum Trennen von Indium und Arsen von einem zinkhaltigen Ausgangsmaterial, wobei das Verfahren Folgendes umfasst
- eine säurearme Auslaugstufe, wobei das Ausgangsmaterial mit einer ersten Auswaschlauge mit einem pH-Wert von 2,5-5 und bei über 40°C Temperatur in Berührung gebracht wird, um eine erste Laugenlösung zu erzielen, die in gelaugter Form einen ersten Teil Arsen und Zink enthält,
- eine erste Fest-Flüssig-Trennstufe zum Trennen von Feststoff aus der ersten Laugenlösung,
- eine stark saure Auslaugstufe, wobei der Feststoff mit einer zweiten Auswaschlauge mit einem pH-Wert von unter 2,5 in Berührung gebracht wird, um eine zweite Laugenlösung zu erzielen, die in gelaugter Form Indium und einen zweiten Teil Zink und Arsen enthält
- eine Wiedergewinnungsstufe zum Trennen und Wiedergewinnen von Indium aus der zweiten Laugenlösung,
wobei die erste Auswaschlauge in der säurearmen Auslaugstufe unter 2 g/l, typischerweise unter 1,5 g/l, weiter typischerweise im Bereich von 0,1-1,5 g/l Schwefelsäure enthält.

2. Verfahren nach Anspruch 1, wobei das Ausgangsmaterial Rauchoxidstaub ist, der unter Zink, Blei, Silber, Germanium, Cadmium, Kupfer, Nickel, Indium und Arsen ausgewählte Elemente enthält.

3. Verfahren nach einem der vorstehenden Ansprüche, wobei das Ausgangsmaterial mit einem TSL-Verfahren als TSL-Ofenstaub gewonnen wird, wobei das TSL-Verfahren Zinkkonzentrat und/oder Zinkerz und/oder Metalle enthaltende feste Abfälle und/oder Zwischenprodukte einer Zinkanlage als Aufgabematerial verwendet.

4. Verfahren nach einem der vorstehenden Ansprüche, wobei das Verfahren ferner eine superstark saure Auslaugstufe zum Auswaschen sowohl von Zink als auch von Indium umfasst, und dies typischerweise nach der stark sauren Auslaugstufe, wobei die bei der superstark sauren Auslaugstufe erzielte Lösung optional in die stark saure Auslaugstufe zurückgeführt wird, und/oder wobei die Schwefelsäurekonzentration in der superstark sauren Auslaugstufe optional bei 100 g/l oder höher, typischerweise bei 140-180 g/l liegt.

5. Verfahren nach einem der vorstehenden Ansprüche, wobei das Verfahren ferner in der Wiedergewinnungsstufe eine zweite Fest-Flüssig-Trennstufe zum Trennen von Laugenrückstand aus der zweiten Laugenlösung umfasst, die Indium und den zweiten Teil von Zink und Arsen in gelaugter Form enthält.

6. Verfahren nach einem der vorstehenden Ansprüche, wobei das Verfahren ferner in der Wiedergewinnungsstufe die Wiedergewinnung von Indium aus der zweiten Laugenlösung durch Lösungsmittelextraktion umfasst.

7. Verfahren nach einem der vorstehenden Ansprüche, wobei die erste Laugenlösung, die den bei der ersten Fest-Flüssig-Trennstufe erzielten ersten Teil von Arsen und Zink in gelaugter Form enthält, einer Entarsenisierungsstufe unterzogen wird, wobei das Arsen als Eisenarsenat und/oder Skorodit ausgefällt wird.

8. Verfahren nach einem der vorstehenden Ansprüche 1 bis 6, wobei die erste Laugenlösung, die den bei der ersten Fest-Flüssig-Trennstufe erzielten ersten Teil von Arsen und Zink in gelaugter Form enthält, einer Entarsenisierungsstufe unterzogen wird, wobei ein Teil oder das gesamte Arsen zementiert wird, und zwar optional zusammen mit dem in der Lösung enthaltenen Kupfer.

9. Verfahren nach Anspruch 8, wobei das nach der Arsen-Zementierung in der Lösung verbleibende Eisen durch Oxidation und Neutralisation ausgefällt wird und das in der Lösung verbleibende Arsen gleichzeitig als Eisenarsenat ausgefällt wird.

10. Verfahren nach einem der vorstehenden Ansprüche, wobei das Verfahren vor der säurearmen Auslaugstufe eine Waschstufe umfasst, wobei das Ausgangsmaterial, typischerweise Rauchoxidstaub, mit Wasser oder unter alkalischen Bedingungen gewaschen wird.

11. Verfahren nach einem der vorstehenden Ansprüche, wobei die erste Auswaschlauge und die zweite Auswaschlauge Schwefelsäure enthalten.

12. Verfahren nach einem der vorstehenden Ansprüche, wobei die erste Auswaschlauge und die zweite Auswaschlauge verbrauchte Säure aus der Zink-Elektrogewinnung enthalten.

13. Verfahren nach einem der vorstehenden Ansprüche, wobei der pH-Wert in der stark sauren Auslaugstufe typischerweise im Bereich von 0,2 bis unter 2,5, weiter typischerweise im Bereich von 0,2-1,0 liegt.

14. Verfahren nach einem der vorstehenden Ansprüche, wobei die säurearme Auslaugstufe und/oder die stark saure Auslaugstufe unter Atmosphärendruck durchgeführt wird.

15. Verfahren nach einem der vorstehenden Ansprüche, wobei die Temperatur in der säurearmen Auslaugstufe zwischen 50 und 80°C liegt und/oder wobei die Temperatur in der stark sauren Auslaugstufe über 60°C liegt, typischerweise zwischen 70 und 100°C.

16. Verfahren nach einem der vorstehenden Ansprüche, wobei in der stark sauren Auslaugstufe die zweite Auswaschlauge 2-120 g/l Schwefelsäure enthält, typischerweise 20-120 g/l und weiter typischerweise 30-80 g/l.

## Revendications

1. Méthode de séparation de l'indium et de l'arsenic à partir d'une matière de départ contenant du zinc, dans laquelle la méthode comprend :
- une étape de lixiviation à l'acide faible, dans laquelle la matière de départ est mise en contact avec une première liqueur de lixiviation à un pH de 2,5 à 5 et à une température supérieure à 40 °C pour obtenir une première solution de lixiviation comprenant, sous une forme lixiviée, une première partie d'arsenic et de zinc,
- une première étape de séparation solide-liquide pour séparer la matière solide de la première solution de lixiviation,
- une étape de lixiviation à l'acide fort, dans laquelle la matière solide est mise en contact avec une seconde liqueur de lixiviation à un pH inférieur à 2,5 pour obtenir une seconde solution de lixiviation comprenant, sous une forme lixiviée, de l'indium et une seconde partie de zinc et d'arsenic,
- une étape de récupération pour séparer et récupérer l'indium à partir de la seconde solution de lixiviation,
dans laquelle, lors de l'étape de lixiviation à l'acide faible, la première liqueur de lixiviation comprend de l'acide sulfurique à moins de 2 g/litre, typiquement moins de 1,5 g/litre, plus typiquement dans la plage de 0,1 à 1,5 g/litre.

2. Méthode selon la revendication 1, dans laquelle la matière de départ est de la poussière d'oxyde de fumée comprenant des éléments choisis parmi le zinc, le plomb, l'argent, le germanium, le cadmium, le cuivre, le nickel, l'indium et l'arsenic.

3. Méthode selon l'une quelconque des revendications précédentes, dans laquelle la matière de départ est obtenue à partir d'un procédé TSL tel que la poussière de fourneau TSL, lequel procédé TSL utilise comme matière d'alimentation un concentré de zinc et/ou un minerai de zinc et/ou des déchets solides contenant des métaux et/ou des produits intermédiaires d'une usine de zinc.

4. Méthode selon l'une quelconque des revendications précédentes, dans laquelle la méthode comprend en outre une super étape de lixiviation à l'acide fort pour lixivier à la fois le zinc et l'indium, typiquement postérieure à l'étape de lixiviation à l'acide fort, dans laquelle la solution obtenue à partir de la super étape de lixiviation à l'acide fort est éventuellement renvoyée à l'étape de lixiviation à l'acide fort et/ou dans laquelle la concentration en acide sulfurique au cours de la super étape de lixiviation à l'acide fort est éventuellement de 100 g/litre ou plus, typiquement de 140 à 180 g/litre.

5. Méthode selon l'une quelconque des revendications précédentes, dans laquelle la méthode comprend en outre, au cours de l'étape de récupération, une seconde étape de séparation solide-liquide pour séparer un résidu de lixiviation à partir de la seconde solution de lixiviation comprenant de l'indium et la seconde partie du zinc et de l'arsenic sous une forme lixiviée.

6. Méthode selon l'une quelconque des revendications précédentes, dans laquelle la méthode comprend en outre, au cours de l'étape de récupération, une récupération d'indium à partir de la seconde solution de lixiviation par extraction au solvant.

7. Méthode selon l'une quelconque des revendications précédentes, dans laquelle la première solution de lixiviation comprenant la première partie d'arsenic et de zinc sous une forme lixiviée obtenue à partir de la première étape de séparation solide-liquide est soumise à une étape de retrait d'arsenic, dans laquelle l'arsenic est précipité sous forme d'arséniate ferrique et/ou de scorodite.

8. Méthode selon l'une quelconque des revendications précédentes 1 à 6, dans laquelle la première solution de lixiviation comprenant la première partie d'arsenic et de zinc sous une forme lixiviée obtenue à partir de la première étape de séparation solide-liquide est soumise à une étape de retrait d'arsenic, dans laquelle une partie ou la totalité de l'arsenic est cémentée, éventuellement conjointement avec le cuivre contenu dans la solution.

9. Méthode selon la revendication 8, dans laquelle le fer restant dans la solution après la cémentation de l'arsenic est précipité par oxydation et neutralisation et tout arsenic restant en solution est précipité simultanément en tant qu'arséniate ferrique.

10. Méthode selon l'une quelconque des revendications précédentes, dans laquelle la méthode comprend une étape de lavage avant l'étape de lixiviation à l'acide faible, dans laquelle la matière de départ, typiquement de la poussière d'oxyde de fumée, est lavée avec de l'eau ou dans des conditions alcalines.

11. Méthode selon l'une quelconque des revendications précédentes, dans laquelle la première liqueur de lixiviation et la seconde liqueur de lixiviation comprennent de l'acide sulfurique.

12. Méthode selon l'une quelconque des revendications précédentes, dans laquelle la première liqueur de lixiviation et la seconde liqueur de lixiviation comprennent de l'acide usagé provenant de l'électro-extraction de zinc.

13. Méthode selon l'une quelconque des revendications précédentes, dans laquelle, au cours de l'étape de lixiviation à l'acide fort, le pH est typiquement dans la plage de 0,2 à moins de 2,5, plus typiquement dans la plage de 0,2 à 1,0.

14. Méthode selon l'une quelconque des revendications précédentes, dans laquelle l'étape de lixiviation à l'acide faible et/ou l'étape de lixiviation à l'acide fort est réalisée sous pression atmosphérique.

15. Méthode selon l'une quelconque des revendications précédentes, dans laquelle, au cours de l'étape de lixiviation à l'acide faible, la température est comprise entre 50 et 80 °C et/ou, au cours de l'étape de lixiviation à l'acide fort, la température est supérieure à 60 °C, typiquement comprise entre 70 et 100 °C.

16. Méthode selon l'une quelconque des revendications précédentes, dans laquelle, au cours de l'étape de lixiviation à l'acide fort, la seconde liqueur de lixiviation comprend de l'acide sulfurique de 2 à 120 g/litre, typiquement 20 à 120 g/litre, plus typiquement 30 à 80 g/litre.
